(19) Europäisches Patentamt
European Patent Office
Office européen des brevets

(11) **EP 4 763 650 A1**

(12) **DEMANDE DE BREVET EUROPEEN**

(43) Date de publication:
**24.06.2026   Bulletin 2026/26**

(21) Numéro de dépôt: **25222365.6**

(22) Date de dépôt: **10.12.2025**

(51) Classification Internationale des Brevets (IPC):
***B60W 40/08*** *(2012.01)*

(52) Classification Coopérative des Brevets (CPC):
**B60W 40/08;** B60W 2040/0827; B60W 2520/10;
B60W 2540/10; B60W 2540/18; B60W 2540/221;
B60W 2552/05; B60W 2554/802

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **18.12.2024   FR 2414451**

(71) Demandeur: **AMPERE s.a.s.**
**92100 Boulougne-Billancourt (FR)**

(72) Inventeurs:
• **BASILIO, Numa**
**78084 GUYANCOURT (FR)**
• **BRELAUD, Séverine**
**78084 GUYANCOURT (FR)**
• **GANDREZ, Clara**
**78084 GUYANCOURT (FR)**
• **KHALIL, Philippe**
**78084 GUYANCOURT (FR)**

(74) Mandataire: **Renault Group**
**Renault s.a.s.**
**1 avenue du Golf**
**FR TCR AVA 055**
**78084 Guyancourt Cedex (FR)**

(54) **PROCÉDÉ ET SYSTÈME DE DÉTECTION D'UN ÉTAT DE VAGABONDAGE DE LA PENSÉE D'UN CONDUCTEUR DE VÉHICULE**

(57)   La présente invention concerne un procédé de détection (100) d'un état de vagabondage de la pensée d'un conducteur de véhicule, comportant une étape de réception (104) :
- de données représentatives de données physiologiques du conducteur,
- de données représentatives de la cinématique du véhicule et/ou de commandes du conducteur, et
- d'au moins une donnée représentative d'un contexte de conduite,
le procédé de détection (100) étant caractérisé en ce qu'il comporte une étape de quantification (108) d'un état de vagabondage de la pensée du conducteur en fonction des données reçues.

[Fig. 2]

**Description**

La présente invention se rapporte au domaine de l'industrie automobile, et concerne plus précisément un procédé et un système de détection d'un état de vagabondage de la pensée d'un conducteur de véhicule.

Un pourcentage substantiel des accidents de la circulation sont dus à des états d'hypovigilance, de distraction ou d'inattention, à tel point que les nouvelles règles de sécurité européennes GSR 2 (pour l'anglais « General Safety Regulations » 2), ou les organismes de sécurité routière tels que l'EuroNCAP (pour l'anglais « European New Car Assessment Program »), imposent aux nouveaux véhicules d'avoir des systèmes de détection de tels états.

Il existe en fait de nombreux types ou causes de distraction ou d'inattention, liés à l'écoute de musique, d'un passager, à la manipulation d'objets dans l'habitacle, à la consultation d'un écran, cette consultation étant liée à la conduite ou non, ... Ces types ou causes de distraction peuvent être analysés par des capteurs présents dans le véhicule, qui peuvent détecter notamment les mouvements du conducteur.

Un autre type de distraction, beaucoup moins facilement décelable, est le vagabondage de la pensée, défini notamment dans la littérature scientifique comme un déplacement du contenu des pensées loin de la tâche de conduite, vers des pensées et des sentiments auto-générés. Le vagabondage de la pensée est donc une forme de distraction endogène ou interne provenant de préoccupations ou pensées du conducteur. Son apparition est facilitée par un environnement routier monotone, un trajet familier, ou bien une tâche routière ne nécessitant pas d'attention soutenue, libérant ainsi de la ressource attentionnelle pour penser à autre chose. Elle est également favorisée par des émotions négatives, notamment par la tristesse ou la dépression.

Le vagabondage de la pensée est donc un type de distraction purement cognitif, non lié à une distraction physique, visuelle et/ou audio, et ne peut donc pas être détectée uniquement en observant par exemple la direction du regard du conducteur.

Or, lorsque le conducteur est dans un tel état, il voit sans regarder, diminue sa distance avec les autres véhicules, conduit plus vite, réagit plus lentement, et a du mal à maintenir une trajectoire rectiligne, d'où un nombre conséquent d'accidents liés à ce type de distraction, qui peut occuper entre un tiers et deux tiers du temps de conduite du conducteur.

Il est donc d'une part difficile de détecter un état de vagabondage de la pensée chez un conducteur, et d'autre part inconstructif d'avertir trop fréquemment le conducteur de cet état quand aucun risque imminent n'est présent, étant donné que de tels avertissements n'auraient plus d'effet sur lui, et pourraient rendre le conducteur insensible à d'autres alertes plus prioritaires.

La présente invention vise à remédier au moins en partie aux inconvénients précités en fournissant un procédé et un système de détection d'un état de vagabondage de la pensée, qui permettent de prévenir des accidents en rendant efficaces les alertes notifiant le conducteur d'un tel état.

A cette fin, l'invention propose un procédé de détection d'un état de vagabondage de la pensée d'un conducteur de véhicule, comportant une étape de réception :

- d'au moins une donnée représentative de données physiologiques du conducteur,
- d'au moins une donnée représentative d'une cinématique du véhicule et/ou de commandes du conducteur, et
- d'au moins une donnée représentative d'un contexte de conduite,

le procédé de détection étant caractérisé en ce qu'il comporte une étape de quantification d'un état de vagabondage de la pensée du conducteur en fonction des données reçues.

La cinématique du véhicule se réfère aux mouvements du véhicule, et à ses paramètres dynamiques. Les données représentatives de la cinématique du véhicule peuvent donc comprendre la position du véhicule, sa vitesse, son accélération ou décélération, sa trajectoire, le rayon de courbure de sa trajectoire, etc.

Le procédé de détection est mis en œuvre dans le véhicule, notamment dans un système de détection implémenté dans un calculateur et utilisant différents capteurs physiologiques.

Grâce à l'invention, l'état de vagabondage étant quantifié, le conducteur peut par exemple n'être alerté que si son état de vagabondage est élevé et si le contexte de conduite présente un risque élevé d'accident dans un tel état. Ainsi l'alerte est plus efficace car uniquement lancée lorsque cela est pertinent, ce qui accroît l'acceptabilité de l'alerte par le conducteur et sa confiance dans l'utilité de la fonction implémentée par le procédé de détection selon l'invention.

Dans un mode de réalisation de l'invention, l'étape de quantification comporte une étape d'association des données reçues, par le calcul d'au moins une distance, entre les données reçues et un groupe parmi un ensemble de groupes associés à des niveaux de vagabondage de la pensée, l'état de vagabondage de la pensée du conducteur étant quantifié par le niveau du groupe auquel sont associées les données reçues.

Dans ce mode de réalisation de l'invention, les groupes sont formés par exemple en utilisant l'algorithme des K-moyennes (en anglais « K-mean »). Cependant en variante, l'étape de quantification utilise par exemple un réseau de neurones préalablement soumis à une étape d'apprentissage supervisé.

On comprend que chaque groupe est associé à un seul niveau de vagabondage de la pensée, mais que l'ensemble des groupes est représentatif des différents niveaux d'une échelle de niveaux de vagabondage de la pensée, telle que mémorisée dans le calculateur implémentant le procédé de détection selon l'invention.

Dans ce mode de réalisation de l'invention, le procédé de détection selon l'invention comporte par exemple une étape préalable d'apprentissage comportant des sous-étapes de :

- collecte, sur chaque période de conduite d'une pluralité de périodes de conduite, d'au moins une donnée représentative de données physiologiques d'un sujet conducteur sur la période de conduite, d'au moins une donnée représentative d'une cinématique du véhicule conduit par le sujet conducteur ou de commandes du sujet conducteur sur la période de conduite, et d'au moins une donnée représentative d'un contexte de conduite sur la période de conduite, les données collectées étant représentées sur chaque période de conduite par un vecteur multidimensionnel de référence,
- regroupement des vecteurs multidimensionnels de référence en une pluralité de groupes associés chacun à un niveau de vagabondage de la pensée,

l'étape de quantification comportant une attribution d'un vecteur multidimensionnel représentatif des données reçues, dit vecteur multidimensionnel courant, à l'un des groupes de la pluralité de groupes, par le calcul de distances entre d'une part le vecteur multidimensionnel courant et d'autre part chacun des groupes de la pluralité de groupes, le vecteur multidimensionnel courant étant associé au groupe de la pluralité de groupes pour lequel la distance calculée est la plus petite.

La sous-étape de collecte est par exemple réalisée sur un ensemble de trajets représentatifs de différents contextes de conduite, notamment un contexte de conduite monotone, par exemple sur une autoroute dégagée, et un contexte de conduite nécessitant une attention soutenue, par exemple en ville. Lors de chaque période de conduite, dans cette sous-étape de collecte, le conducteur est interrogé pour évaluer lui-même son niveau de vagabondage de la pensée. Cette méthode d'évaluation est appelée « probe caught » en langue anglaise. Cependant, d'autres méthodes d'évaluation du niveau de vagabondage de la pensée du conducteur, pour chaque période de conduite, sont utilisables dans cette sous-étape de collecte.

Dans un mode de réalisation de l'invention, les données collectées lors d'une période de conduite, ou les données reçues, comportent au moins une donnée parmi :

- un rythme cardiaque du conducteur,
- une ouverture de pupille du conducteur,
- une direction du regard du conducteur,
- un rythme de clignotement des paupières du conducteur,
- une vitesse du véhicule
- une demande de couple moteur du véhicule,
- un angle au volant,
- une distance inter-véhicules,
- une luminosité,
- une durée depuis laquelle le conducteur est dans un état de vagabondage de la pensée,
- des positions d'obstacles environnants ou d'autres usagers, et
- un type de route.

Une luminosité faible favorise notamment l'entrée dans un état de vagabondage de la pensée. Les données reçues peuvent comprendre d'autres données météorologiques, par exemple par une valeur de température. Les données reçues peuvent comprendre de plus d'autres données représentatives de commandes du conducteur, par exemple un appui sur une pédale, un nombre d'actions de conduite telles qu'une prise de virage, un actionnement de clignotant, etc.

Chaque vecteur multidimensionnel de référence comporte par exemple une dimension par donnée collectée ou reçue.

D'autre part, le calcul de distances comporte par exemple pour chaque groupe de la pluralité de groupes, un calcul d'une somme pondérée de différences entre des coordonnées du vecteur multidimensionnel courant et des coordonnées d'un des groupes de la pluralité de groupes. Cette caractéristique optionnelle permet de donner plus de poids, dans le calcul des distances, à des distances relatives à certaines données, par exemple des données représentatives de mesures physiologiques et/ou de commandes du conducteur, en fonction de données contextuelles, comme par exemple le type de route.

Ainsi pour mieux prendre en compte l'impact du type de route sur les valeurs présentes dans le vecteur multidimensionnel courant, le calcul de distances donnera plus de poids à la différence entre la vitesse du véhicule et la vitesse moyenne du groupe avec lequel on calcule une distance, et à la différence entre la fréquence cardiaque et la fréquence cardiaque moyenne de ce groupe, dans le cas où le type de route est une longue ligne droite ou une autoroute, que dans le cas où le type de route est urbain, par exemple. Cela permet de rattacher avec plus de pertinence le vecteur multidimensionnel courant à un groupe représentatif de l'état de vagabondage de la pensée du conducteur.

Dans un autre exemple, pour prendre en compte l'impact des données météorologiques sur les valeurs présentes dans le vecteur multidimensionnel courant, le calcul de distances donnera également plus de poids à la différence entre la vitesse du véhicule et la vitesse moyenne du groupe avec lequel on calcule une distance, et à la différence entre la fréquence cardiaque et la fréquence cardiaque moyenne de ce groupe, dans le cas où la luminosité est faible, que dans le cas où la luminosité est élevée. Les données météorologiques ayant un impact moins prononcé que le type de route sur l'état cognitif du conducteur, les poids dus aux données météorologiques seront plus faibles que les poids dus au type de route.

Selon une caractéristique optionnelle du procédé de détection selon l'invention, celui-ci comporte de plus une étape d'alerte au conducteur via une interface homme-machine, d'un niveau élevé de vagabondage de la pensée, lorsque le niveau de vagabondage de la pensée issu de l'étape de quantification est strictement supérieur à un niveau prédéterminé de vagabondage de la pensée.

L'étape de réception de données comporte alors éventuellement la réception d'un historique d'alertes précédemment déclenchées lors d'étapes précédentes d'alerte au conducteur d'un niveau élevé de vagabondage de la pensée. Ainsi l'étape d'alerte courante tiendra compte des alertes précédentes pour déclencher ou non une première alerte ou une nouvelle alerte. En effet, des alertes trop proches les unes des autres sont contreproductives.

Par ailleurs, le procédé de détection selon l'invention comporte par exemple une étape d'estimation de la fiabilité d'au moins une des données reçues, et lorsque la fiabilité estimée de ladite au moins une donnée reçue est inférieure à un seuil prédéterminé de fiabilité, le calcul de distances n'utilise pas, dans le vecteur multidimensionnel courant, une dimension correspondant à ladite au moins une donnée reçue. En variante de réalisation de cette étape optionnelle d'estimation de la fiabilité d'au moins une des données reçues, lorsque la fiabilité estimée de ladite au moins une donnée reçue est inférieure à un seuil prédéterminé de fiabilité, le vecteur multidimensionnel courant comporte à la place de la donnée reçue, une valeur par défaut, prise en compte dans le calcul de distances.

L'invention concerne aussi un système de détection d'un état de vagabondage de la pensée d'un conducteur de véhicule, comportant des moyens de réception de données représentatives de données physiologiques du conducteur, de données représentatives d'une cinématique du véhicule et/ou de commandes du conducteur, et d'au moins une donnée représentative d'un contexte de conduite,
le système de détection étant caractérisé en ce qu'il comporte des moyens de quantification d'un état de vagabondage de la pensée du conducteur en fonction des données reçues par les moyens de réception.

Le système de détection selon l'invention comporte des moyens pour mettre en œuvre le procédé de détection selon l'invention, et présente des avantages similaires à ceux du procédé de détection selon l'invention.

Dans un mode de réalisation de l'invention, le système de détection selon l'invention comporte des moyens d'alerte du conducteur lorsque les moyens de quantification fournissent un niveau de vagabondage de la pensée du conducteur, strictement supérieur à un niveau prédéterminé de vagabondage de la pensée.

Le système de détection selon l'invention peut également comporter des moyens d'estimation de la fiabilité des moyens de quantification, et des moyens d'inhibition des moyens d'alerte en fonction de la fiabilité estimée par les moyens d'estimation.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :

[Fig.1] représente un véhicule intégrant un système de détection selon l'invention, d'un état de vagabondage de la pensée d'un conducteur de véhicule, dans un mode de réalisation de l'invention,

[Fig.2] représente des étapes d'un procédé de détection selon l'invention, d'un état de vagabondage de la pensée du conducteur du véhicule de la [Fig.1], dans ce mode de réalisation de l'invention, et

[Fig.3] représente des groupes de données collectées, correspondant chacun à un niveau de vagabondage de la pensée.

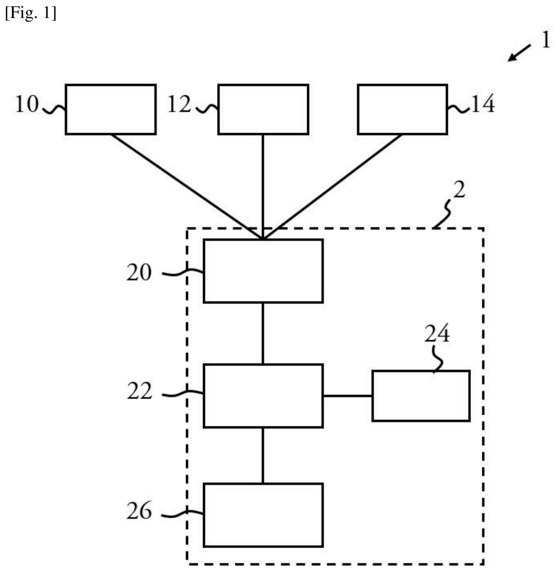

Selon un mode de réalisation de l'invention représenté en [Fig.1], un véhicule 1 comporte un système de détection 2 d'un état de vagabondage de la pensée d'un conducteur du véhicule 1.

Le système de détection 2 est ici un calculateur du véhicule, connecté à un bus informatique 10 du véhicule 1, tel qu'un bus CAN (d'après l'anglais « Controller Area Network ») ou Ethernet. Le système de détection 2 est également connecté à différents capteurs physiologiques 12, comme par exemple un oculomètre et/ou une ceinture cardiaque. Enfin le système de détection 2 est connecté à un module d'acquisition de données de l'environnement 14, par exemple un calculateur d'un système avancé d'aide à la conduite (aussi appelé ADAS pour l'anglais « Advanced Driver Assistance System »), implémentant un module de modélisation de l'environnement de conduite du véhicule 1. En variante, ce calculateur est identique à celui implémentant le système de détection 2.

Le module de modélisation utilise des données issues des différents caméras, radars et LiDARs (d'après l'anglais « Light Detection And Ranging ») du véhicule 1, pour identifier des objets dans l'environnement immédiat du véhicule 1, par exemple dans un rayon d'environ 200 mètres autour du véhicule 1, ces objets étant la route, les tracés et panneaux routiers, les obstacles sur la route, les autres véhicules, les piétons, cyclistes, etc.

En variante, le module d'acquisition de données de l'environnement 14 peut récupérer des données de l'environnement de conduite à partir d'une analyse de la dynamique du véhicule (la vitesse permet par exemple de déduire un type de route) et/ ou d'une analyse des images acquises par une ou plusieurs caméras.

Le système de détection 2 comporte des moyens de réception 20 des données issues du bus informatique 10, des capteurs physiologiques 12 et du module d'acquisition de données de l'environnement14.

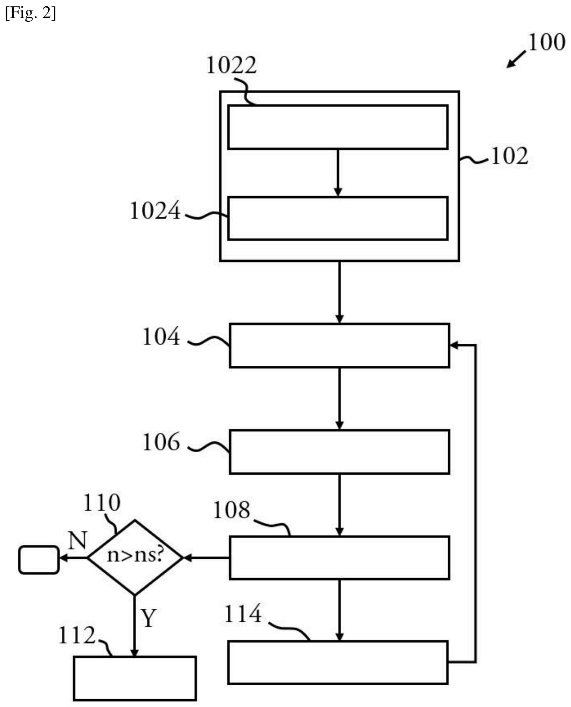

Le système de détection 2 comporte également des moyens de quantification 22 d'un état de vagabondage de la pensée du conducteur en fonction des données reçues par les moyens de réception 20. Ces moyens de quantification 22 comportent au moins un processeur, une mémoire vive et une mémoire morte dans laquelle est stocké un programme d'ordinateur dont les instructions, lorsqu'elles sont exécutées sur le processeur, permettent de mettre en œuvre le procédé de détection 100 (référencé [Fig.2]) selon l'invention d'un état de vagabondage de la pensée du conducteur.

Selon un mode de réalisation de l'invention, le système de détection 2 comporte de plus un moyen de stockage 24 d'un historique des données utilisées ou fournies par les moyens de quantification 22, et/ou des moyens d'alerte 26 du conducteur, consistant ici en un port logiciel ou matériel apte à permettre au système de détection 2 de communiquer avec une interface homme-machine du véhicule 1, cette interface homme-machine comportant par exemple un écran et/ou un haut-parleur, et/ou un dispositif haptique, par exemple intégré au volant du véhicule 1.

On décrit maintenant, en relation avec la [Fig.2], le procédé de détection 100 d'un état de vagabondage de la pensée du conducteur, selon l'invention.

Le procédé de détection 100 selon l'invention comporte une étape préalable d'apprentissage 102, elle-même comportant une première sous-étape 1022 de collecte de données sur différentes périodes de conduite représentatives de différents contextes de conduite.

Lors de cette première sous-étape 1022 de collecte, un sujet conducteur, pouvant être le conducteur du véhicule 1 ou un autre conducteur d'un autre véhicule, effectue des trajets sur divers types de routes présentant différentes caractéristiques, telles que des autoroutes, des rues en ville, des routes en ligne droite ou sinueuses, avec beaucoup ou peu de trafic, de piétons ou d'autres obstacles, et avec différentes conditions météorologiques. Ces différentes caractéristiques du trajet, que sont le type de route, son encombrement et les conditions météorologiques, forment un contexte de conduite. Chaque période de conduite est associée à un contexte de conduite.

Sur chaque période de conduite, des mesures physiologiques sont effectuées sur le sujet conducteur en utilisant par exemple un oculomètre et une ceinture cardiaque, de sorte à obtenir pour chaque période de conduite, une fréquence cardiaque, une fréquence respiratoire et des données oculaires et pupillométriques. Les données oculaires concernent le mouvement des yeux et comportent par exemple une durée de fixation du regard et un nombre de clignotements des paupières par minute, tandis que les données pupillométriques comportent par exemple un diamètre de la pupille du conducteur. Des données telles que l'âge peuvent aussi être récupérées car les jeunes conducteurs sont plus susceptibles d'être en vagabondage de la pensée.

Sur chaque période de conduite, des données représentatives de l'environnement sont également prélevées, comme par exemple la position des obstacles environnants ou des autres usagers, le type d'infrastructure ou encore les conditions météorologiques

De plus, sur chaque période de conduite, des données sont prélevées sur le bus informatique du véhicule, telles que la vitesse du véhicule et/ou la demande de couple moteur, l'usage des pédales.

Chaque période de conduite est de plus associée à un niveau de vagabondage de la pensée du sujet conducteur, évaluée par le sujet conducteur lui-même, par une interrogation pendant cette période de conduite, par exemple par une interface homme-machine. Dans ce mode de réalisation de l'invention, l'état de vagabondage de la pensée est quantifié sur une échelle de 1 à 4 de niveaux, le niveau 1 correspondant à l'absence de vagabondage de la pensée, le niveau 2 à un léger état de vagabondage de la pensée, le niveau 3 à un état bien établi de vagabondage de la pensée, et le niveau 4 à un état intense de vagabondage de la pensée. Bien entendu, l'invention s'applique de manière identique quel que soit la taille de l'échelle utilisée.

Pour chaque période de conduite, les données ainsi collectées pendant cette période de conduite sont ensuite représentées sous la forme d'un vecteur multidimensionnel dit de référence. Chaque dimension du vecteur multidimensionnel de référence correspond à l'une de ces données collectées. Le vecteur multidimensionnel de référence comprend donc :

- une ou plusieurs données physiologiques mesurées sur le conducteur, par exemple un rythme cardiaque en battements par minute, une ouverture de pupille en millimètres, un rythme de clignotement de paupières en nombre par minutes, et éventuellement d'autres données physiologiques comme l'âge et le genre du conducteur,
- une ou plusieurs données prélevées sur le bus informatique du véhicule et représentatives d'une cinématique du véhicule et/ou de commandes du conducteur, comme par exemple une vitesse en mètres par seconde, une demande de couple moteur en Newton mètres, un angle au volant en degrés, l'actionnement de clignotants, etc.

- une ou plusieurs données représentatives d'un contexte de conduite, comme par exemple une distance inter-véhicules en mètres, un type de route (exemples : route monotone -type autoroute, sollicitante - type ville ou montagne), une luminosité, la position des obstacles environnants ou des autres usagers, etc,
- éventuellement des données d'historique, tel qu'une durée depuis laquelle le conducteur est dans un état de vagabondage de la pensé, etc.

L'étape préalable 102 comporte une deuxième sous-étape de regroupement 1024 des vecteurs multidimensionnels de référence enregistrés pendant la première sous-étape 1022 de collecte. Cette sous-étape de regroupement 1024 utilise un algorithme de regroupement, ici l'algorithme dit des K-moyennes, mais d'autres algorithmes de regroupement sont utilisables tels que CAH (pour Classification Ascendante Hiérarchique) ou DBSCAN (pour l'anglais « Density-Based Spatial Clustering of Applications with Noise »).

L'application de l'algorithme des K-moyennes permet de regrouper les vecteurs multidimensionnels de référence issus de la première sous-étape 1022 de collecte, en K groupes.

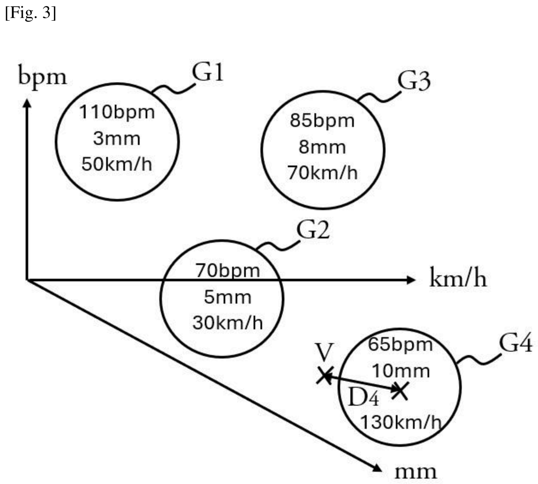

La [Fig.3] représente schématiquement quatre groupes G1, G2, G3 et G4 issus de l'algorithme des K-moyennes, en supposant pour simplifier que les vecteurs multidimensionnels ne comportent qu'un nombre de pulsations cardiaques en bpm (battements par minutes), un diamètre de pupille en mm (millimètres) et une vitesse du véhicule en km/h (kilomètres par heure).

Puis un niveau de vagabondage de la pensée est attribué à chaque groupe constitué par l'algorithme des K-moyennes, en fonction notamment des auto-évaluations effectuées par le ou les sujets conducteurs pendant les périodes de conduite associées aux vecteurs multidimensionnels du groupe, et des contextes de conduite de ces périodes de conduites. On prend par exemple la moyenne des auto-évaluations associées aux vecteurs multidimensionnels du groupe pour attribuer un niveau de vagabondage de la pensée au groupe considéré.

Par exemple le premier groupe G1 correspond à une vitesse moyenne du conducteur de 50km/h, à une ouverture des pupilles faibles et à une fréquence cardiaque élevée, marquant une attention soutenue du conducteur. Ce premier groupe est de ce fait associé au niveau 1 de vagabondage de la pensée. Cette association est cohérente avec le fait que les contextes de conduite correspondants dans ce premier groupe G1, sont sollicitants pour le sujet conducteur.

Le deuxième groupe G2 correspond à une vitesse moyenne du conducteur de 30km/ h, à une ouverture des pupilles plutôt moyenne, et à une fréquence cardiaque assez basse. Ce deuxième groupe est associé au niveau 2 de vagabondage de la pensée, ce qui est cohérent avec les contextes de conduite sollicitants correspondant à ce deuxième groupe G2.

Le troisième groupe G3 correspond à une vitesse moyenne du conducteur de 70km/ h, à une ouverture des pupilles plutôt grande, et à une fréquence cardiaque moyenne. Ce troisième groupe est associé au niveau 3 de vagabondage de la pensée, ce qui est cohérent avec les contextes de conduite moins sollicitants associés à ce troisième groupe G3.

Enfin le quatrième groupe G4 correspond à une vitesse moyenne du conducteur de 130km/h, à une grande ouverture des pupilles et à une fréquence cardiaque basse. Ce quatrième groupe est associé au niveau 4 de vagabondage de la pensée, ce qui est cohérent avec les contextes de conduite moins sollicitants associés à ce quatrième groupe G4.

On comprend donc que l'attribution d'un niveau de vagabondage de la pensée à chaque groupe dépend des auto-évaluations du ou des sujets conducteurs correspondant aux vecteurs multidimensionnels de ce groupe, des valeurs présentes dans ces vecteurs multidimensionnels, mais aussi de données de contexte associées aux périodes de conduite représentées par ces vecteurs multidimensionnels de référence.

Une fois les groupes constitués et associés chacun à un niveau de vagabondage de la pensée, l'étape d'apprentissage 102 est terminée et les données associées aux différents groupes sont enregistrées dans une mémoire du système de détection 2.

Suite à l'étape d'apprentissage 102, on suppose que le véhicule 1 est conduit, déclenchant une première étape 104 du procédé de détection 100, qui est la réception par les moyens de réception 20, de données physiologiques issues des capteurs physiologiques 12, de données issues du bus informatique 10 et de données fournies par le module d'acquisition de données de l'environnement 14. Ces dernières données sont par exemple des objets détectés dans l'environnement immédiat du véhicule 1, permettant aux moyens de quantification 22 de déterminer un contexte de conduite, ou bien directement un contexte de conduite déterminé par le module d'acquisition de données de l'environnement 14.

Les données reçues permettent de former un vecteur multidimensionnel courant V (référencé [Fig.3]) dans le même espace multidimensionnel que les vecteurs multidimensionnels de référence utilisés à l'étape d'apprentissage 102 pour former les groupes, par exemple les groupes G1 à G4. Autrement dit, au moins une partie des données reçues correspond aux mêmes types de données que celles utilisées pour former les groupes issus de l'étape d'apprentissage 102.

Suite à la première étape de réception 104, le procédé de détection 100 peut comprendre une deuxième étape d'estimation 106 de la fiabilité des données reçues. Cette étape d'estimation 106 utilise par exemple des données de fiabilité issues des capteurs physiologiques 12. Par exemple si l'oculomètre n'est pas fonctionnel, celui-ci envoie une estimation de confiance dans sa mesure proche de 0 (la mesure étant d'autant plus fiable que l'estimation de confiance est proche de 1 et d'autant moins fiable que l'estimation de confiance est proche de 0), et cette information est par exemple enregistrée lors de cette étape d'estimation 106 pour mettre en œuvre la prochaine et troisième étape 108 du procédé de détection 100 de manière dégradée, ou bien pour ne pas poursuivre le procédé de détection 100 en attendant une remise en état de l'oculomètre. On suppose cependant, dans cet exemple d'utilisation de l'invention, que les capteurs physiologiques remontent des mesures fiables.

La troisième étape du procédé de détection 100 est la quantification 108 de l'état de vagabondage de la pensée du conducteur.

Cette troisième étape de quantification 108 peut comprendre une sous-étape préalable de normalisation du vecteur multidimensionnel courant V. Dans ce cas, les vecteurs multidimensionnels de référence de chaque groupe G1 à G4 sont également normalisés, de la même façon, une seule fois lors de l'étape d'apprentissage 102.

Cette normalisation utilise par exemple la formule suivante, qui permet de normaliser toutes les coordonnées entre 0 et 1 :

$$\frac{x_i - \min(x)}{\max(x) - \min(x)}$$ avec $x_i$ une coordonnée du vecteur multidimensionnel courant V ou du vecteur multidimensionnel de référence considéré, correspondant à un type de donnée codé sur une dimension, $\min(x)$ la valeur minimale des coordonnées des vecteurs multidimensionnels de référence relatives à cette dimension, et $\max(x)$ la valeur maximale des coordonnées des vecteurs multidimensionnels de référence relatives à cette dimension.

On peut bien sûr choisir une autre méthode de normalisation.

Dans la suite, le vecteur multidimensionnel courant V et les groupes G1 à G4 considérés sont normalisés c'est-à-dire qu'on travaille sur des coordonnées comprises entre 0 et 1.

Puis dans cette troisième étape de quantification 108, les moyens de quantification 22 calculent, pour chaque k-ième groupe de vecteurs multidimensionnels de référence constitués lors de l'étape d'apprentissage 102, une distance $D_k$ entre le vecteur multidimensionnel courant V et ce k-ième groupe de référence. Cette distance $D_k$ est par exemple calculée comme une distance entre le vecteur multidimensionnel courant V ayant les coordonnées $(x_1, ..., x_N)$, et le centre du groupe de référence, de coordonnées $(x_{m1},...,x_{mN})$, les coordonnées du vecteur multidimensionnel courant V et du centre du groupe de référence étant pondérées par des poids $w_1$ à $w_N$, dans ce calcul de distance :

$$D_k = \sqrt{w_1 (x_1 - x_{m1})^2 + w_2 (x_2 - x_{m2})^2 + \ldots + w_{N1} (x_N - x_{mN})^2}$$

Les poids $w_1$ à $w_N$ peuvent par exemple tous valoir un. Dans ce cas, la distance $D_k$ est une distance euclidienne. Dans ce mode de réalisation de l'invention, certains poids peuvent être strictement supérieurs ou inférieurs à un, de sorte à donner plus d'importance dans l'évaluation du niveau de vagabondage de la pensée du conducteur, à certaines données, telles que par exemple une donnée physiologique, une donnée environnementale ou une donnée d'historique.

Les valeurs des poids $w_1$ à $w_N$ sont par exemple modifiées en fonction de l'environnement dans lequel circule le véhicule. Ainsi lorsque le conducteur est sur autoroute, les données physiologiques et comportementales (issues du bus informatique, telles que la demande de couple moteur, la distance avec le véhicule de devant) peuvent être pondérées par un poids strictement supérieur à un, par exemple de valeur deux ou trois. Cela permet de modéliser le fait que l'atteinte d'un niveau élevé de vagabondage de la pensée est plus rapide dans un environnement autoroutier.

Au contraire, les données météorologiques étant peu influentes sur l'entrée dans un état de vagabondage de la pensée élevé dans un environnement autoroutier, elles peuvent par exemple être pondérées par un poids strictement inférieur à un, par exemple de 0,5, lorsque le conducteur évolue dans un tel environnement.

La distance $D_k$ la plus petite est calculée entre le vecteur multidimensionnel courant V et le groupe auquel le vecteur multidimensionnel courant V est attribué. Dans cet exemple d'utilisation de l'invention, la distance $D_4$ est la plus petite calculée, le vecteur multidimensionnel courant V est donc attribué au groupe G4.

L'état de vagabondage de la pensée du conducteur est quantifié au niveau n du groupe auquel est attribué le vecteur multidimensionnel courant V, autrement dit au niveau 4, dans cet exemple de réalisation de l'invention.

Il est à noter que lorsqu'un des capteurs physiologiques n'est pas fiable, la dimension correspondant à ce capteur n'est par exemple pas utilisée dans le calcul des distances entre le vecteur multidimensionnel courant V et chacun des groupes G1 à G4 issus de l'étape d'apprentissage 102, ce qui permet d'obtenir un niveau de vagabondage de la pensée du conducteur, indépendamment de la remontée de ce capteur physiologique, ou la valeur de poids associé dans le calcul de distance peut être ajustée en fonction de la fiabilité de la mesure.

L'étape de quantification 108 est suivie d'une quatrième étape de comparaison 110 du niveau n d'état de vagabondage de la pensée tel que quantifié par les moyens de quantification 22 à l'étape précédente, avec un niveau prédéterminé ns de vagabondage de la pensée, avec par exemple ns égal à 2.

Lorsque le niveau n est strictement supérieur à ce niveau prédéterminé ns (branche Y), donc égal à trois ou quatre, le système de détection 2 alerte le conducteur, dans une cinquième étape 112 du procédé de détection, par un signal d'alerte indiquant un état élevé de vagabondage de la pensée du conducteur. Par exemple le système de détection 2 utilise un dispositif haptique pour faire vibrer le volant, et/ou affiche un message sur un écran du véhicule 1, et/ou émet un message sonore indiquant au conducteur qu'il est dans un tel état.

Lorsqu'au contraire le niveau n est inférieur ou égal à ce niveau prédéterminé ns (branche N), aucune alerte n'est émise.

L'étape de quantification 108 peut être suivie d'une étape d'enregistrement 114 du niveau n de vagabondage de la pensée du conducteur, et d'un niveau de fiabilité de cette quantification, dans le moyen de stockage 24. Le niveau de fiabilité de cette quantification peut être lié à la fiabilité des capteurs utilisés. L'étape d'enregistrement 114 a par exemple lieu parallèlement à l'étape de comparaison 110.

Puis le procédé de détection 100 reboucle à l'étape 104 de réception périodiquement, par exemple toutes les trente secondes.

On comprend donc que le système de détection 2 est apte à quantifier un état de vagabondage de la pensée du conducteur, à estimer la fiabilité de cette quantification, à évaluer la durée pendant laquelle le conducteur se trouve dans cet état, et à alerter le conducteur de manière opportune, en fonction du niveau n de vagabondage de la pensée du conducteur, de la durée évaluée et de la fiabilité estimée.

Par ailleurs, ce mode de réalisation de l'invention est facilement implémentable dans le véhicule, permet un calcul rapide et en temps réel de l'état de vagabondage de la pensée du conducteur, et une personnalisation d'un système avancé d'aide à la conduite intégrant l'invention, ce qui facilite l'acceptabilité des alertes du système de détection selon l'invention.

Bien sûr, l'invention n'est pas limitée aux exemples qui viennent d'être décrits et de nombreux aménagements peuvent être apportés à ces exemples sans sortir du cadre de l'invention.

## Revendications

1. Procédé de détection (100) d'un état de vagabondage de la pensée d'un conducteur de véhicule, comportant une étape de réception (104) :

    - d'au moins une donnée représentative de données physiologiques du conducteur,
    - d'au moins une donnée représentative d'une cinématique du véhicule et/ou de commandes du conducteur, et
    - d'au moins une donnée représentative d'un contexte de conduite, le procédé de détection (100) étant **caractérisé en ce qu'**il comporte une étape de quantification (108) d'un état de vagabondage de la pensée du conducteur en fonction des données reçues.

2. Procédé de détection (100) d'un état de vagabondage de la pensée selon la revendication 1, dans lequel l'étape de quantification (108) comporte une étape d'association des données reçues, par le calcul d'au moins une distance ($D_k$) entre les données reçues et un groupe (G4) parmi un ensemble de groupes (G1, G2, G3, G4) associés à des niveaux de vagabondage de la pensée, l'état de vagabondage de la pensée du conducteur étant quantifié par le niveau (n) du groupe (G4) auquel sont associées les données reçues.

3. Procédé de détection (100) d'un état de vagabondage de la pensée selon la revendication 2, comportant une étape préalable d'apprentissage (102) comportant des sous-étapes de :

    - collecte (1022), sur chaque période de conduite d'une pluralité de périodes de conduite, d'au moins une donnée représentative de données physiologiques d'un sujet conducteur sur la période de conduite, d'au moins une donnée représentative d'une cinématique du véhicule conduit par le sujet conducteur et/ou de commandes du sujet conducteur sur la période de conduite, et d'au moins une donnée représentative d'un contexte de conduite sur la période de conduite, les données collectées étant représentées sur chaque période de conduite par un vecteur multidimensionnel de référence,
    - regroupement (1024) des vecteurs multidimensionnels de référence en une pluralité de groupes (G1, G2, G3, G4) associés chacun à un niveau de vagabondage de la pensée,

l'étape de quantification (108) comportant une attribution d'un vecteur multidimensionnel représentatif des données reçues, dit vecteur multidimensionnel courant (V), à l'un des groupes (G4) de la pluralité de groupes (G1, G2, G3, G4), par le calcul de distances ($D_k$ ) entre d'une part le vecteur multidimensionnel courant (V) et d'autre part chacun des groupes (G1, G2, G3, G4) de la pluralité de groupes (G1, G2, G3, G4), le vecteur multidimensionnel courant (V) étant associé au groupe (G4) de la pluralité de groupes (G1, G2, G3, G4) pour lequel la distance ($D_4$) calculée est la plus petite.

4. Procédé de détection (100) d'un état de vagabondage de la pensée selon la revendication 3, dans lequel les données collectées lors d'une période de conduite, ou les données reçues, comportent au moins une donnée parmi :

   - un rythme cardiaque du conducteur,
   - une ouverture de pupille du conducteur,
   - une direction du regard du conducteur,
   - un rythme de clignotement des paupières du conducteur,
   - une vitesse du véhicule
   - une demande de couple moteur du véhicule,
   - un angle au volant,
   - une distance inter-véhicules,
   - une luminosité,
   - une durée depuis laquelle le conducteur est dans un état de vagabondage de la pensée,
   - des positions d'obstacles environnants ou d'autres usagers, et
   - un type de route.

5. Procédé de détection (100) d'un état de vagabondage de la pensée selon la revendication 3 ou 4, dans lequel le calcul de distances comporte pour chaque groupe de la pluralité de groupes (G1, G2, G3, G4), un calcul d'une somme pondérée de différences entre des coordonnées du vecteur multidimensionnel courant (V) et des coordonnées d'un des groupes (G1, G2, G3, G4) de la pluralité de groupes.

6. Procédé de détection (100) d'un état de vagabondage de la pensée selon l'une quelconque des revendications 1 à 5, comportant une étape d'alerte (112) au conducteur via une interface homme-machine, d'un niveau élevé de vagabondage de la pensée, lorsque le niveau de vagabondage de la pensée issu de l'étape de quantification (108) est strictement supérieur à un niveau prédéterminé (ns) de vagabondage de la pensée.

7. Procédé de détection (100) d'un état de vagabondage de la pensée selon la revendication 6, dans lequel l'étape de réception (104) de données comporte la réception d'un historique d'alertes précédemment déclenchées lors d'étapes précédentes d'alerte (112) au conducteur d'un niveau élevé de vagabondage de la pensée.

8. Système de détection (2) d'un état de vagabondage de la pensée d'un conducteur de véhicule (1), comportant des moyens de réception (20) de données représentatives de données physiologiques du conducteur, de données représentatives d'une cinématique du véhicule et/ou de commandes du conducteur, et d'au moins une donnée représentative d'un contexte de conduite,
   le système de détection (2) étant **caractérisé en ce qu'**il comporte des moyens de quantification (22) d'un état de vagabondage de la pensée du conducteur en fonction des données reçues par les moyens de réception (20).

9. Système de détection selon la revendication 8, comportant des moyens d'alerte (26) du conducteur lorsque les moyens de quantification (22) fournissent un niveau (n) de vagabondage de la pensée du conducteur, strictement supérieur à un niveau prédéterminé (ns) de vagabondage de la pensée.

[Fig. 1]

[Fig. 2]

[Fig. 3]

| | Europäisches Patentamt European Patent Office Office européen des brevets | **RAPPORT DE RECHERCHE EUROPEENNE** | **Numéro de la demande**<br>EP 25 22 2365 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X<br><br>A | US 10 877 444 B1 (ROACH SHANE M [US] ET AL) 29 décembre 2020 (2020-12-29)<br>* colonne 13, ligne 45 - colonne 14, ligne 53; figure 5 *<br>* colonne 20, ligne 1 - colonne 21, ligne 5; figure 12 *<br>----- | 1,6-9<br><br>2-5 | INV.<br>B60W40/08 |
| X | US 11 211 095 B1 (HARMAN INT IND [US]) 28 décembre 2021 (2021-12-28)<br>* colonne 4, lignes 37-62 *<br>----- | 1,8 | |
| A | CURRANO REBECCA ET AL: "Driven to Distraction: Exploring Mind Wandering During a Virtual Reality City Drive", COMPANION PROCEEDINGS OF THE 29TH INTERNATIONAL CONFERENCE ON INTELLIGENT USER INTERFACES, ACMPUB27, NEW YORK, NY, USA,<br>22 septembre 2024 (2024-09-22), pages 227-238, XP059702206,<br>DOI: 10.1145/3640792.3677723<br>ISBN: 979-8-4007-0511-3<br>* le document en entier *<br>----- | 1 | |

**DOMAINES TECHNIQUES RECHERCHES (IPC)**

B60W

Le présent rapport a été établi pour toutes les revendications

| Lieu de la recherche | Date d'achèvement de la recherche | Examinateur |
|---|---|---|
| Munich | 18 décembre 2025 | Granier, Frédéric |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-12-2025

| Document brevet cité au rapport de recherche | Date de publication | Membre(s) de la famille de brevet(s) | Date de publication |
|---|---|---|---|
| US 10877444      B1 | 29-12-2020 | AUCUN | |
| US 11211095      B1 | 28-12-2021 | CN     113815628 A | 21-12-2021 |
| | | EP       3925812 A1 | 22-12-2021 |
| | | US   2021398562 A1 | 23-12-2021 |

EPO FORM P0460

Pour tout renseignement concernant cette annexe : voir Journal Officiel de l'Office européen des brevets, No.12/82